# EUROPEAN PATENT APPLICATION

(11) **EP 1 391 805 A1**
(43) Date of publication of application: **25.02.2004**
(21) Application number: 02018133.5
(22) Date of filing: 14.08.2002
(51) Int. Cl.: G06F 3/02, G06F 3/023

(54) **Human interface device**

(71) Applicant: Cherry GmbH, 91275 Auerbach (DE)
(72) Inventor: Lochner Matthias,, 95463 Bindlach (DE); Daum Arnulf,, 95445 Bayreuth (DE)
(74) Representative: Leske, Thomas, Dr.

(57) **Abstract**

The present invention relates to a human interface device (30) for transmitting data to and receiving data from at least one data processing unit wherein the device comprises a human interface device module (44), a wireless communication module (46) and a cable communication module (42), characterized in that data communication connections between the modules are switchable so as to vary an operating mode of the device. The device may be a keyboard (30) communicating with a computer system (32) via a USB connection and also communicating with other devices via a wireless communication link.

## Description

The present invention relates to a Human Interface Device (HID), for example a keyboard for a computer which is capable of transferring data input by a user via an interface to a data processing unit, for example a computer. The invention is of particular suitability for applications involving a radio communication of data between an HID and a computer. In this regard, the recent development of a communication protocol called Bluetooth (tm) is of particular relevance for the application of the invention.

HIDs are common means for inputting data into a computer. Typical examples include keyboards, mice, tracker balls and the like. Other more sophisticated examples include touch screen devices (usually with an LCD display), magnetic stripe readers, bar-code readers and other measurement devices such as voltage meters.

Conventionally, HIDs are connected to a host computer via a cable. Such an arrangement is often perfectly satisfactory but can in certain circumstances be limiting in either functionality or user convenience. Accordingly, wireless connection arrangements have been developed, for example cordless keyboards and mice, where the HID is connected to the host computer via, typically, a radio-based link, enabling the user to enter data whilst not being physically connected to the computer.

An example of a prior art human interface device is described in WO-A-01/16686, describing a peripheral universal bus hub which may be a keyboard communicating with a computer via a wireless link and having a variety of peripheral devices attached thereto. A similar arrangement is shown in EP-A-0 872 791. EP-A-1 176 498 describes a keyboard which can be connected to a computer via a wire connection and which acts as a relay for other peripheral devices which may communicate with the keyboard via a wireless connection.

Furthermore, WO-A-01/18662 describes a hub connectable to a computer via a USB (universal serial bus) connection having a module for communicating with peripheral devices via a radio link.

Various radio-based communication protocols have been developed. One of these which is currently being incorporated into an increasing number of products is the "Bluetooth" (tm), hereinafter "BT", protocol. This protocol is described in numerous standards documents of the BT special interest group, and are termed Profile Specifications. Profile Specifications have been written for a number of different aspects to the overall radio communication protocol, including Cordless Telephony, Intercom, Serial Port. Headset, Dial Up Networking, Fax, Local Area Networking, Generic Object Exchange, Object Push, File Transfer, and Synchronization. In addition, a draft profile specification has been written for HIDs and is identified as the Bluetooth HID Profile, Version 0.95c of May 2002, incorporated herein by reference for all purposes.

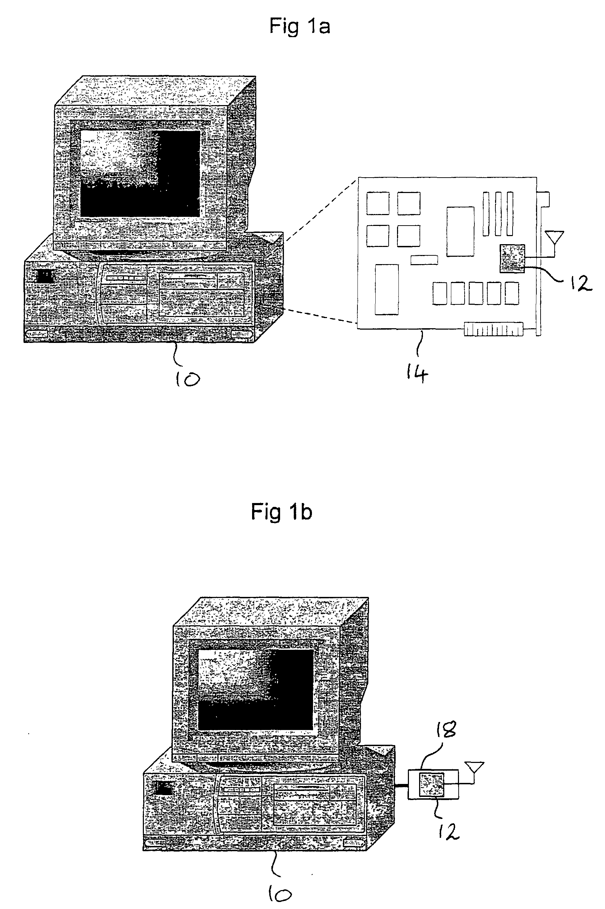

Currently, products are emerging in which a keyboard or mouse may be connected to a computer via a BT link in accordance with the HID Profile. In these products, a first BT interface unit is present at the computer and a second BT interface unit is present at the HID, either a keyboard or a mouse. The first interface unit acts as the host unit and the second interface unit acts as a device unit. Typically, the BT interface unit at the computer will be integrated into the computer peripheral devices, either as an internal unit, particularly in the case of portable notebook computers, as part of an interface card, or as a plug-in unit, typically connected to a USB socket on the computer, this being generally termed a BT dongle. The latter two arrangements are shown illustratively in Figures 1a and 1b.

In the case of BT dongles, the upper part of the BT protocol stack functionality may be found either at the computer level, as part of the operating system or as a device driver, or may be present in the physical dongle unit, with the data being communicated via the USB (Universal Serial Bus) interface. The advantage of the latter arrangement being that BT devices can operate with computers whose operating system is not BT compatible.

One advantage of a keyboard having a BT connection is that it opens the possibility of one keyboard being used to input data into more than one device, for example, a desktop computer, a notebook computer, a personal digital assistant (PDA) and a mobile (cellular) telephone. With currently available devices, however, it would be necessary to perform a rather complex procedure for tearing down a connection with one device and establishing a new connection with a second device.

It is an object of the present invention to provide a human interface device with a greater flexibility than the examples described above.

In one aspect the present invention provides a human interface device for transmitting data to and receiving data from at least one data processing unit wherein the device comprises a human interface device module, a wireless communication module and a cable communication module, characterized in that data communication connections between the modules are switchable so as to vary an operating mode of the device.

By providing a human interface device in which the operating mode is variable, the flexibility of the device can be increased significantly.

Further aspects of the invention are provided according to the dependent claims.

The invention will now be described, by way of example only, with reference to the accompanying drawings in which:
- Figs. 1a and 1b: show prior art BT interface arrangements;
- Figs. 2a, 2b and 2c: show an HID according to the invention communicating with a plurality of data processing units;
- Fig 3: shows a first operating mode of an HID according to the invention; and
- Figs 4-7: show further operating modes of an HID according to the invention.

Referring to Figs. 1a and 1b, there is shown a conventional BT communication interface arrangement at a computer 10. In Fig. 1a, there is shown a BT radio interface unit 12 as part of an expansion card 14. In fig. 1b, there is shown a BT radio interface unit 12 as part of a USB dongle 18.

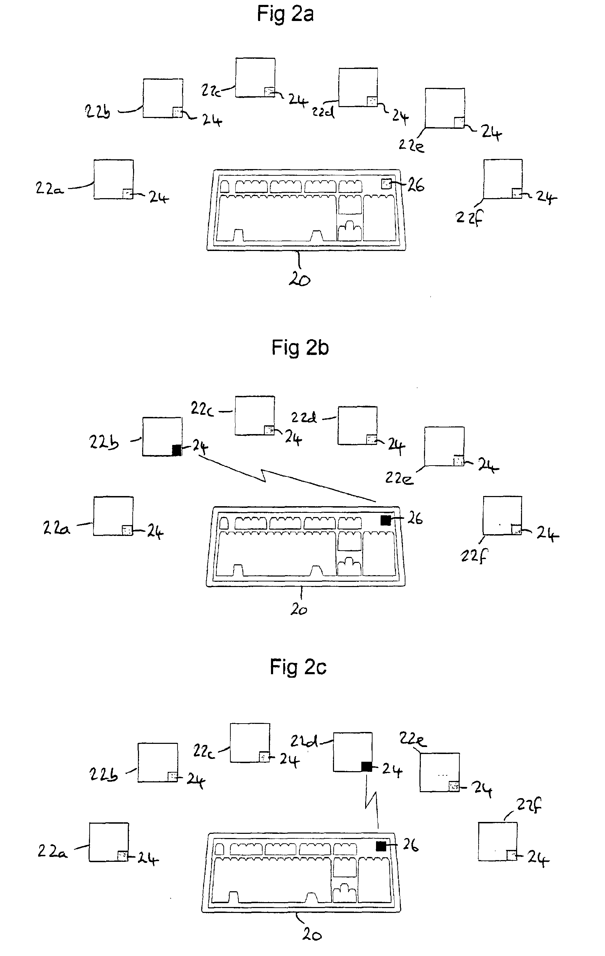

Figs. 2a, 2b and 2c show an example of a HID in the form of a computer keyboard 20 being arranged to communicate with a plurality of data processing units 22a-22f. Unit 22a is a first desktop computer, unit 22b is a second desktop computer, unit 22c is a PDA, unit 22d is a cellular phone, unit 22e is a video or audio device and unit 22f is a notebook computer. Each of the units 22a-f incorporates a respective master BT interface device 24 whilst the keyboard 20 incorporates a BT interface device 26. In Fig. 2b, the keyboard 20 is shown by means of a line 28 to be in communication with the second desktop computer 22b. In Fig. 2c, the keyboard is shown by means of a line 30 to be in communication with the cellular telephone 22d. In order for a user to select a unit for communication, the keyboard 20 could be equipped with a number of keys for selecting a desired unit for communication. Upon selecting one of these keys, the necessary handshaking procedures are performed with the new unit and all further data sent by the keyboard 20 will only be processed by the newly selected unit. As an alternative to a number of keys, a single key could be used, with the available units for communication being scrolled through with each successive operation of the key selecting the next unit from a pre-programmed list. A display for displaying the selected unit would also be advantageous.

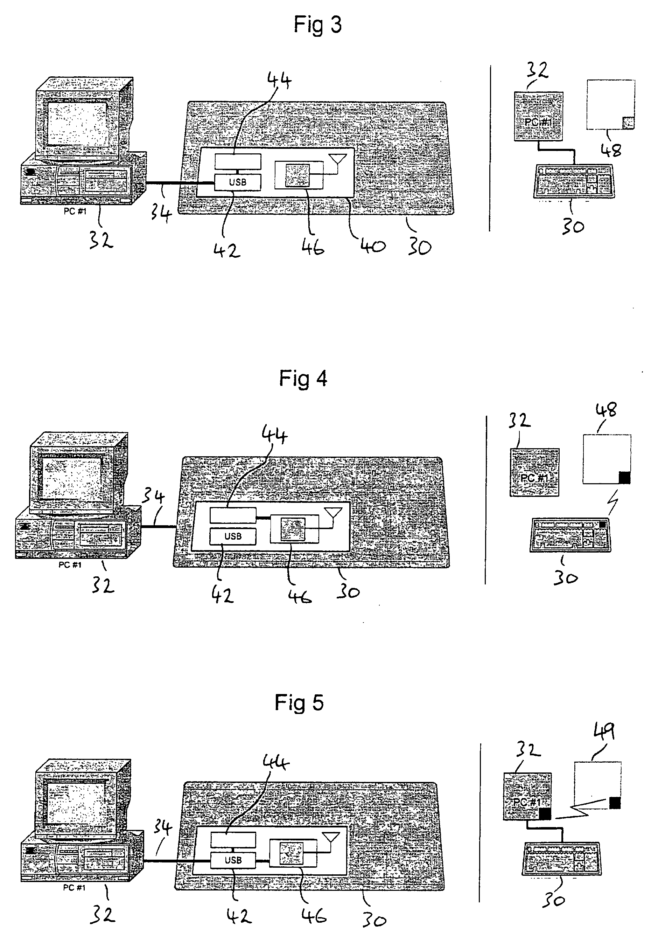

Referring to Figs. 3 - 7, there are shown various operating modes of a HID unit 30 according to the present invention in the form of a keyboard having an integrated BT module. The unit 30 comprises a cable communication module in the form of a USB connection module 42, an HID module in the form of a key-matrix scan module, here termed a keyscan module, 44, a wireless communication module in the form of a BT module 46. These modules are shown schematically in a box 40. Whilst the modules 42, 44 and 46 are shown as separate entities, it will be realised that these modules could be configured on a single suitably programmed processor with the division between the individual modules being a logical division only.

In Fig. 3, the unit 30 is operating as a USB keyboard HID with an idle integrated BT module and this is shown connected to a computer system 32 by means of a wire connection 34. In the figure, the wire connection 34 is a USB connection. Because of the potential security applications of sending data via a radio interface, it would normally be preferred to maintain a wire connection as the data transport mechanism for the main data processing unit, for example a desktop computer attached to a network.

A connection is shown between the computer system 32 and the USB connection module 42 as well as a connection between the USB connection module 42 and the keyscan module 44 of the keyboard. The BT interface 46 is not connected in this figure. On the right hand side of Fig. 3, it is shown that the computer system 32 is in communication with the unit 30 but a BT host device 48 cannot communicate with the keyboard because no connection to the BT module 46 has been made. Accordingly, in the operating mode indicated, the unit 30 is acting as a conventional USB keyboard.

In Fig. 4, the operating mode of the unit 30 has been changed. As shown, the unit 30 is operating as a BT HID keyboard. The computer system 32 is still connected to the unit 30 but this connection is now only providing power to the keyboard and there is no data transfer from the keyscan module 44 across the wire 34. The keyscan module 44 is connected to the BT module 46 but there is no connection to the USB connection module 42. Again, on the right hand side of the figure, the resulting communication arrangement is shown where the unit 30 is in communication only with the BT host device 48. In this instance, the keyboard would be used for inputting characters to the BT host unit 48, which could be a PDA, via the radio interface.

A yet further operating mode of the unit 30 is shown in Fig. 5. In this operating mode, the unit 30 is acting as a compound/composite USE HID keyboard with a BT USE dongle. Here, the keyscan module 44 is connected to the USB connection module 42 which in turn is connected to the BT module 46. The USB connection module 42 is also connected to the computer system 32. In this operating mode, the communication arrangement is shown in the right of the figure where the computer system 32 communicates via the BT interface with a BT device 49 and via the USB connection with the keyscan module 44. The actual connection between the BT device 49 and the computer system 32 is, however, actually via the BT module 46 of the unit 30 rather than a separate BT module connected to the computer. The device 49 could be a BT enabled mouse. This arrangement is particularly attractive where the BT unit 49 is a cellular telephone which is being used to transmit data to and from the computer system 32, for example using the GPRS protocol, or future data transmission protocols such as UMTS or other 3G protocols.

The necessary upper parts of the BT protocol stack could be operating either at the unit 30 or at the computer system 32. Where the upper protocol stack parts are operating at the unit 30, the data transferred over the USB link are decoded data and where the upper protocol stack parts are operating at the computer system 32, the USB link is passing the raw data received over the radio interface. The former arrangement is particularly suitable for data processing systems which are not BT enabled since the use of a BT link is not apparent to the computer system 32. For example, a BT printer could be connected to a computer system in a manner such that the computer sees the printer as a USB printer.

Whilst HID solutions are known in which a HID is connected via a wire connection to a host computer with a wireless communication device being incorporated in the HID, for example as described in EP-A-1 176 498, the ability of the present invention to switch operating mode is not part of the prior art and provides the present invention with great flexibility.

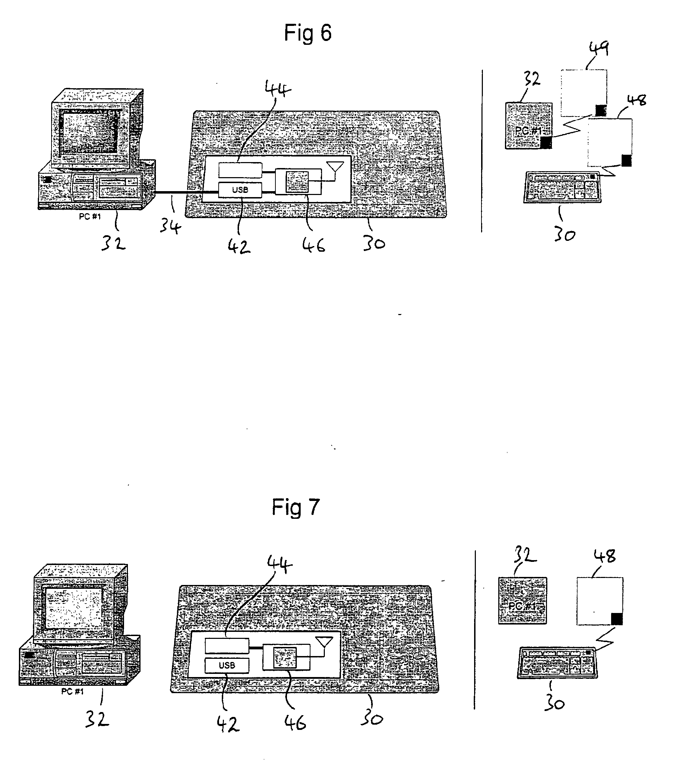

Fig. 6 shows another operating mode of the keyboard 30. In this operating mode, the unit 30 is operating as a BT HID keyboard for a BT host device and as BT dongle for the computer system 32. As shown, in this operating mode both the keyscan module 44 and the USB connection module 42 are connected to the BT module 46 with the USB connection module 42 also being connected to the computer system 32 but not the keyscan module 44. As shown on the right hand side of the figure, in this arrangement, the computer system 32 can be in communication with a BT device 49, for example a BT/LAN access point, whilst the keyscan module 44 is in communication with a BT host unit 48.

A still further operating mode of the unit 30 is shown in Fig. 7. In the operating mode shown, the unit 30 is acting as a BT HID keyboard for a BT host device. Here, only the keyscan module 44 is connected to the BT module 46. The unit 30 thus acts as an HID for a BT host unit 48 only. Since there is no connection to the computer system 32, the unit 30 operates in a battery powered mode. The batteries may be rechargeable batteries which are recharged when the physical connection to the computer system 32 is established via the USB cable.

In order to provide the above described functionality compared with existing HIDs, the unit 30 is provided with the necessary embedded software for operating the BT interface. Depending on the operating mode, the BT upper stack software can be operating at the computer system 32. Alternatively, the BT upper stack software can be provided at the BT module 46.

In order to provide the unit 30 with the functionality described above, the keyboard includes a programmed microcontroller (not shown). The microcontroller program includes the necessary software elements for operating the various modules. In addition, the microcontroller program reacts to the pressing of assigned keys on the unit 30 for a user to select which device communication should be established with.

Such keys would generally be either pre-programmed where the keyboard is sold as part of a package of equipment or programmable by a user according to the particular demands of the user. In certain circumstances, such as the situation shown in Fig. 6, the selection by a user of a device for communication other than the computer system 32 would not disable the USB connection. In this regard, the keyboard 30 would be responsive to the program operating on the computer system 32, determining whether a disconnection of the USB connection was authorised or not.

Whilst one embodiment of the invention has been described in relation to a computer keyboard operating according to the BT protocol, it will be recognised that the invention is not limited to this particular arrangement. Other radio communication protocols could also be employed, for example a ''wireless LAN" protocol according to the IEEE 802.11 standards or the HomeRF standards. HIDs other than keyboards could incorporate the invention. Instead of a USB cable connection, other cable connections could be used such as Firewire or PS/2.

The HID of the invention may also be adapted to receive software updates over either the BT connection or via the cable connection. The connections between the various modules of the unit 30 may be switchable in software only, meaning that the transfer of data is controlled by a microprocessor but the physical connection is maintained. Alternatively, it would be possible to physically switch the connections to provide the required switchability.

## Claims

1. A human interface device (30) for transmitting data to and receiving data from at least one data processing unit wherein the device comprises a human interface device module (44), a wireless communication module (46) and a cable communication module (42), **characterized in that** data communication connections between the modules are switchable so as to vary an operating mode of the device.

2. The device according to claim 1 wherein the operating mode of the device controls the communication path of the device (30) with an external data processing unit.

3. The device according to claim 1 or claim 2 wherein the wireless communication module (46) is a radio communication module.

4. The device according to claim 3 wherein the human interface device module (44) is a key-matrix scanning module.

5. The device according to claim 3 or claim 4 wherein the radio communication module (46) is a Bluetooth module.

6. The data transfer device according to any preceding claim wherein the cable communication module (42) is a universal serial bus (USB) connection module.

7. The device according to claim 6 wherein the wireless communication module (46) is a Bluetooth wireless communication module and wherein operating software for operating the wireless communication module according to the Bluetooth protocol stack is installed at the device.

8. The device according to any preceding claim wherein the device further comprises at least one selection device for selecting an operating mode of the device.

9. The device according to any preceding claim wherein the device includes a display for displaying an operating mode of the device.

## Amended claims

### Amended claims in accordance with Rule 86(2) EPC.

1. A human interface device (30) for transmitting data to and receiving data from both a data processing unit (32) and a wireless host device (48, 22a-f),wherein the device (30) comprises a human interface module (44), a wireless communication module (46) and a cable communication module (42),
**characterized in that** data communication connections between the modules (42, 44, 46) are switchable so as to variably configure the communication path of the human interface device (30) to both the data processing unit (32) and the wireless host device (48, 22a-f),
the variety of switchable configurations comprising an operating mode (Fig. 6),
wherein the human interface module (44) is connected to the wireless communication module (46) for operating the device as a wireless human interface device (30) for the wireless host device (48, 22a-f),
whilst the cable communication module (42) is connected to the data processing unit (32) and to the wireless communication module (46) for establishing a communication between the data processing unit (32) and another wireless device (49) like a LAN access point or a cellular phone.

2. The human interface device according to claim 1, wherein the wireless communication module (46) is a Bluetooth communication module.

3. The human interface device according to claim 1 or 2, wherein the human interface module (44) is a key-matrix scanning module.

4. The human interface device according to any preceding claim, wherein the cable communication module (42) is a universal serial bus (USB) connection module.

5. The human interface device according to claims 2 to 4, wherein operating software for operating the wireless communication module (46) according to the Bluetooth protocol stack is installed at the device (30).

6. The human interface device according to any preceding claim, wherein the device (30) further comprises at least one selection device for selecting a communication configuration of the device.

7. The human interface device according to any preceding claim, wherein the device (30) includes a display for displaying a communication configuration of the device (30).
